# EUROPEAN PATENT SPECIFICATION

(11) **EP 4 253 751 B1**
(45) Date of publication and mention of the grant of the patent: **04.06.2025**
(21) Application number: 23157427.8
(22) Date of filing: 18.02.2023
(51) Int. Cl.: F02M 26/16, F02M 26/41, F02M 26/12, F02M 26/23

(54) **EGR DEVICE FOR INTERNAL COMBUSTION ENGINE**
AGR-VORRICHTUNG FÜR EINEN VERBRENNUNGSMOTOR
DISPOSITIF EGR POUR MOTEUR À COMBUSTION INTERNE

(30) Priority: 31.03.2022 JP 2022059899
(43) Date of publication of application: 04.10.2023
(73) Proprietor: Suzuki Motor Corporation, Hamamatsu-shi, Shizuoka 432-8611 (JP)
(72) Inventor: TSUNODA, Seiya, HAMAMATSU-SHI, 432-8611 (JP)
(74) Representative: Plasseraud IP

(56) References cited:
- WO-A1-2021/182075
- CN-A- 110 159 449
- DE-A1- 102005 049 462
- US-A1- 2019 383 245
- US-A1- 2022 364 532

## Description

### [Technical Field]

The present invention relates to an EGR device for an internal combustion engine.

### [Background Art]

There has been known an EGR (exhaust gas recirculation) structure which refluxes, as EGR gas, a part of exhaust gas to an intake side (see Patent Literature 1, Patent Literature 2, or Patent Literature 3). The EGR structure includes an EGR cooler which cools EGR gas.

The EGR cooler is arranged in a space surrounded by a cylinder block, an exhaust manifold portion, and an exhaust gas cleaning device and is arranged to be sandwiched between the cylinder block and the exhaust gas cleaning device in a front-rear direction.

The EGR cooler includes a coolant inflow pipe which supplies coolant into the EGR cooler and a coolant outflow pipe through which the coolant is discharged from the EGR cooler, and the coolant inflow pipe and the coolant outflow pipe are arranged to be sandwiched between the cylinder block and the exhaust gas cleaning device in the front-rear direction.

### [Citation List]

### [Patent Literature]

[Patent Literature 1] JP 5719376 B2
[Patent Literature 2] US 2019/383245 A1
[Patent Literature 3] DE 10 2005 049462 A1

### [Summary of Invention]

### [Technical Problem]

However, since the coolant inflow pipe and the coolant outflow pipe are arranged to be sandwiched between the cylinder block and the exhaust gas cleaning device in the front-rear direction in such a conventional EGR structure, coolant flowing through the coolant inflow pipe rises in temperature under the influence of heat emanating from the exhaust gas cleaning device.

For the above-described reason, high-temperature coolant may be introduced from the coolant inflow pipe into the EGR cooler to worsen cooling performance of the EGR cooler.

The present invention has been made in view of the above-described circumstances, and an object thereof is to provide an EGR device for an internal combustion engine capable of inhibiting coolant flowing through coolant piping from being affected by heat from an exhaust passage portion to thereby prevent cooling performance of an EGR cooler from deteriorating.

### [Solution to Problem]

There is provided an EGR device for an internal combustion engine according to claim 1.

### [Advantageous Effects of Invention]

As described above, according to the present invention described above, it is possible to inhibit coolant flowing through the coolant piping from being affected by heat from the exhaust passage portion to thereby avoid cooling performance of the EGR cooler from deteriorating.

### [Brief Description of Drawings]

Figure 1 is a front view of an internal combustion engine including an EGR device according to an embodiment of the present invention.
Figure 2 is a left side view of the internal combustion engine including the EGR device according to the embodiment of the present invention.
Figure 3 is a front view of a cylinder head and a cylinder head cover of the internal combustion engine according to the embodiment of the present invention.
Figure 4 is a left side view of the cylinder head and the cylinder head cover of the internal combustion engine according to the embodiment of the present invention.
Figure 5 is a plan view of an EGR housing portion of the internal combustion engine according to the embodiment of the present invention.

### [Description of Embodiment]

An EGR device according to an embodiment of the present invention is configured to be mounted on an internal combustion engine of which a body is provided with, at an exhaust side wall thereof, an exhaust passage portion into which an exhaust gas from the body is introduced, the EGR device including: an EGR passage portion branching from the exhaust passage portion to circulate, as EGR gas, a part of the exhaust gas in the exhaust passage portion into the body; an EGR cooler adjacent to the exhaust passage portion, constituting a part of the EGR passage portion; and a coolant piping to circulate a coolant into the body through the EGR cooler to thereby cool the EGR gas flowing through the EGR cooler, wherein the coolant piping is arranged on an opposite side of the EGR cooler from the exhaust passage portion.

With the above-described configuration, the EGR device for the internal combustion engine according to the embodiment of the present invention can inhibit coolant flowing through the coolant piping from being affected by heat from the exhaust passage portion to thereby avoid cooling performance of the EGR cooler from deteriorating.

### [Embodiment]

An EGR device for an internal combustion engine according to an embodiment of the present invention will be described below with reference to the drawings.

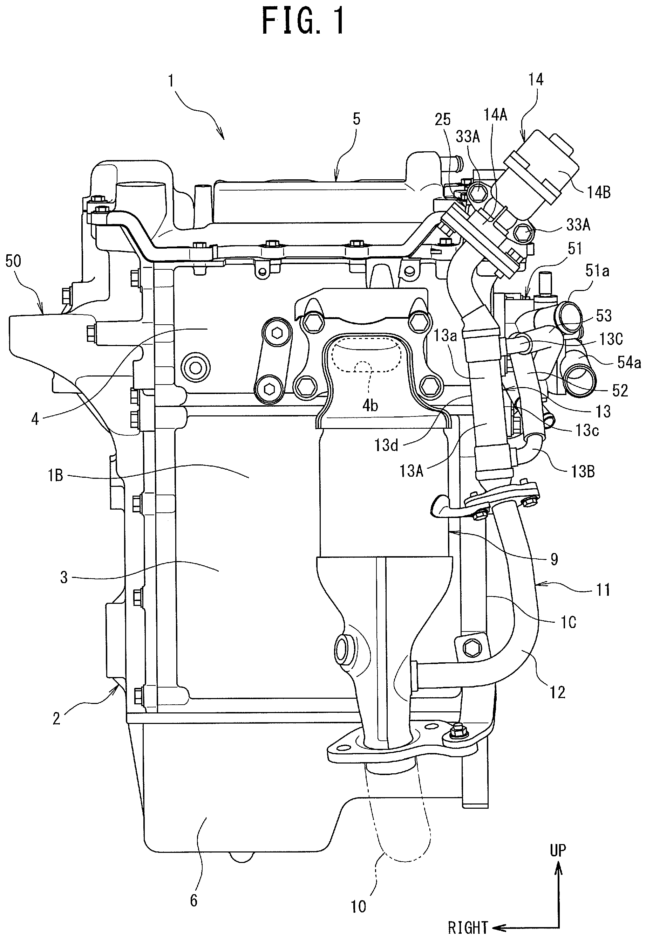

Figures 1 to 5 show the EGR device for the internal combustion engine according to the embodiment of the present invention.

In Figures 1 to 5, up-down, front-rear, and left-right directions corresponds to those in an internal combustion engine mounted on a vehicle. Hereinafter, a front-rear direction in a vehicle will be simply referred to as front-rear direction; a left-right direction therein (vehicle width direction) will be simply referred to as left-right direction; and an up-down direction therein (vehicle height direction) will be simply referred to as up-down direction.

A configuration will be described first.

In Figure 1, an engine 1 is provided in an engine room (not shown) of a vehicle. The engine 1 has an engine body 2, and the engine body 2 is composed of a cylinder block 3, a cylinder head 4, a cylinder head cover 5, and an oil pan 6. The engine 1 and the engine body 2 according to the present embodiment constitute an internal combustion engine and a body thereof respectively.

The cylinder head 4 is attached to an upper portion of the cylinder block 3, and the cylinder head cover 5 is attached to an upper portion of the cylinder head 4. The oil pan 6 is attached to a lower portion of the cylinder block 3, and lubrication oil for the engine 1 is accumulated in the oil pan 6.

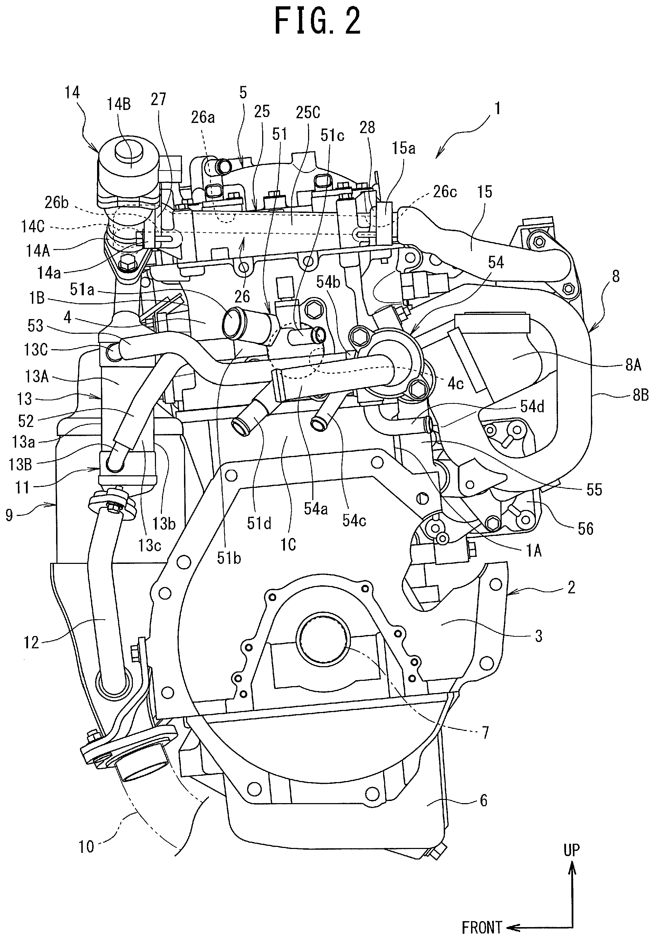

A plurality of cylinders (not shown) are provided in the cylinder block 3, and the cylinders are arrayed in the vehicle width direction. Respective pistons (not shown) are housed in the cylinders, and each piston is connected to a crankshaft 7 (see Figure 2) via a connecting rod (not shown).

The engine 1 according to the present embodiment is a transversely mounted engine with the crankshaft 7 extending in the vehicle width direction, and the vehicle is an FF (front-engine, front-wheel drive) vehicle.

Each piston reciprocates inside the cylinder, thereby rotating the crankshaft 7 via the connecting rod.

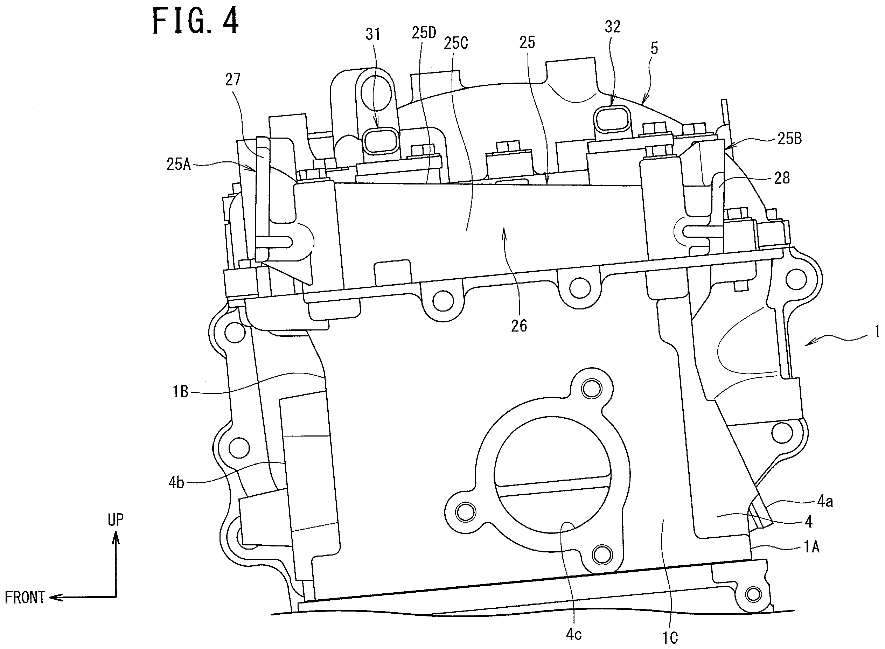

A plurality of intake ports 4a and an exhaust collection portion 4b (see Figure 4) are formed in the cylinder head 4. The exhaust collection portion 4b according to the present embodiment constitutes an exhaust outlet.

The intake ports 4a communicate with the respective cylinders and introduce incoming air into the cylinders. The exhaust collection portion 4b communicates with the respective cylinders through a plurality of exhaust ports (not shown). That is, the exhaust ports extend from the respective cylinders to the exhaust collection portion 4b, and the exhaust collection portion 4b collects the exhaust ports.

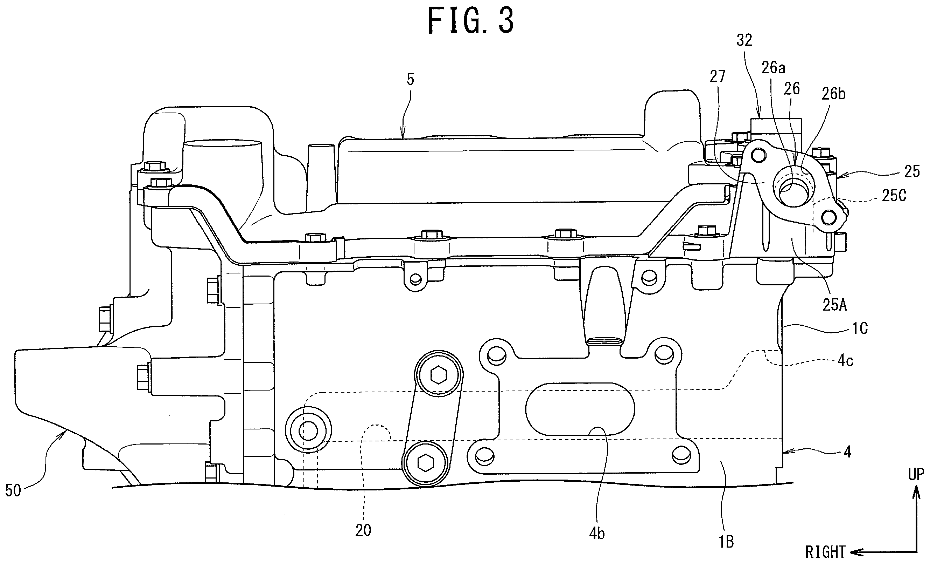

As indicated by imaginary lines in Figure 3, a coolant passage 20 is provided in the cylinder head 4. The coolant passage 20 extends from a right end portion of the cylinder head 4 toward a left end portion.

Coolant is introduced from a coolant passage (not shown) which is formed in the cylinder block 3 into a right end portion of the coolant passage 20. The coolant introduced into the coolant passage 20 flows to the left along the coolant passage 20. For this reason, the cylinder head 4 is cooled by the coolant. Coolant which is cooled by a radiator (not shown) is introduced from main piping (to be described later) into the coolant passage of the cylinder block 3.

As shown in Figures 2 and 4, the engine 1 has an intake side wall 1A on a side where the intake ports 4a open and an exhaust side wall 1B which is located on a side (a front side) opposite to the intake side wall 1A and is on a side where the exhaust collection portion 4b opens.

The intake side wall 1A forms rear walls of the cylinder block 3, the cylinder head 4, and the cylinder head cover 5 at which the intake ports 4a open, and the exhaust side wall 1B forms front walls of the cylinder block 3, the cylinder head 4, and the cylinder head cover 5 at which the exhaust collection portion 4b opens.

As shown in Figure 4, the engine 1 has a coolant discharge side wall 1C. At the coolant discharge side wall 1C, a coolant discharge port 4c which discharges coolant from the coolant passage 20 is formed in the cylinder head 4.

The coolant discharge side wall 1C is connected to a left end portion of the intake side wall 1A and a left end portion of the exhaust side wall 1B and extends in the front-rear direction. A chain cover 50 is attached to a right side wall on the opposite side of the engine 1 from the coolant discharge side wall 1C.

As shown in Figure 2, an intake manifold 8 is attached to the intake side wall 1A. The intake manifold 8 has a surge tank 8A and a plurality of branch pipes 8B (one of which is shown) corresponding in number to the cylinders.

For example, if the engine 1 is a 3-cylinder engine, three branch pipes 8B are provided. An intake pipe (not shown) is connected to the surge tank 8A via a throttle body (not shown).

Incoming air which is cleaned by an air cleaner (not shown) is introduced into the intake pipe, and the incoming air is introduced into the surge tank 8A through the throttle body.

A throttle valve (not shown) is housed in the throttle body, and the throttle valve adjusts the amount of incoming air to be introduced into the surge tank 8A.

The plurality of branch pipes 8B extend from the surge tank 8A to the respective intake ports 4a and distribute incoming air which is introduced into the surge tank 8A among the respective intake ports 4a.

As shown in Figures 1 and 2, an exhaust cleaning device 9 is attached to the exhaust side wall 1B. Exhaust gas which is burned inside each cylinder is discharged from the cylinder through the exhaust port and collected in the exhaust collection portion 4b, and is then discharged from the exhaust collection portion 4b into the exhaust cleaning device 9.

The exhaust cleaning device 9 cleans exhaust gas which is discharged from the exhaust collection portion 4b and discharges the cleaned exhaust gas into the atmosphere through an exhaust pipe 10 which is connected to a downstream end of the exhaust cleaning device 9. The exhaust cleaning device 9 and the exhaust pipe 10 according to the present embodiment constitute an exhaust passage portion.

The engine 1 is provided with an EGR (exhaust gas recirculation) device 11. The EGR device 11 includes upstream-side EGR piping 12, an EGR cooler 13, an EGR valve 14, and downstream-side EGR piping 15.

An upstream end of the upstream-side EGR piping 12 is connected to the exhaust cleaning device 9 and branches from the exhaust cleaning device 9. A part of exhaust gas is introduced as EGR gas from the exhaust cleaning device 9 into the upstream-side EGR piping 12. The terms upstream and downstream here refer to upstream and downstream in a direction in which incoming air, exhaust gas, or EGR gas flows.

The EGR valve 14 is located downstream of the upstream-side EGR piping 12, and the upstream-side EGR piping 12 is located upstream of the EGR valve 14.

The EGR cooler 13 is provided adjacent to the exhaust cleaning device 9 at the exhaust side wall 1B of the engine 1.

A downstream end of the upstream-side EGR piping 12 is connected to an upstream end of the EGR cooler 13. The EGR cooler 13 has an EGR cooler body 13A through which EGR gas and coolant flow, a coolant introduction portion 13B which introduces coolant into the EGR cooler body 13A, and a coolant discharge portion 13C which discharges the coolant from the EGR cooler 13.

The EGR cooler 13 cools EGR gas which is introduced from the upstream-side EGR piping 12 by heat exchange between the EGR gas and coolant.

A downstream end of the EGR cooler 13 is connected to the EGR valve 14, and the EGR valve 14 is connected to an EGR housing portion 25. The EGR valve 14 adjusts a flow rate of EGR gas which flows through an EGR housing passage portion 26 (to be described later).

An upstream end of the downstream-side EGR piping 15 is connected to the EGR housing portion 25, and EGR gas which is introduced into the EGR housing portion 25 is discharged into the downstream-side EGR piping 15. A downstream end of the downstream-side EGR piping 15 is connected to the surge tank 8A, and the EGR gas discharged into the downstream-side EGR piping 15 is introduced into the surge tank 8A.

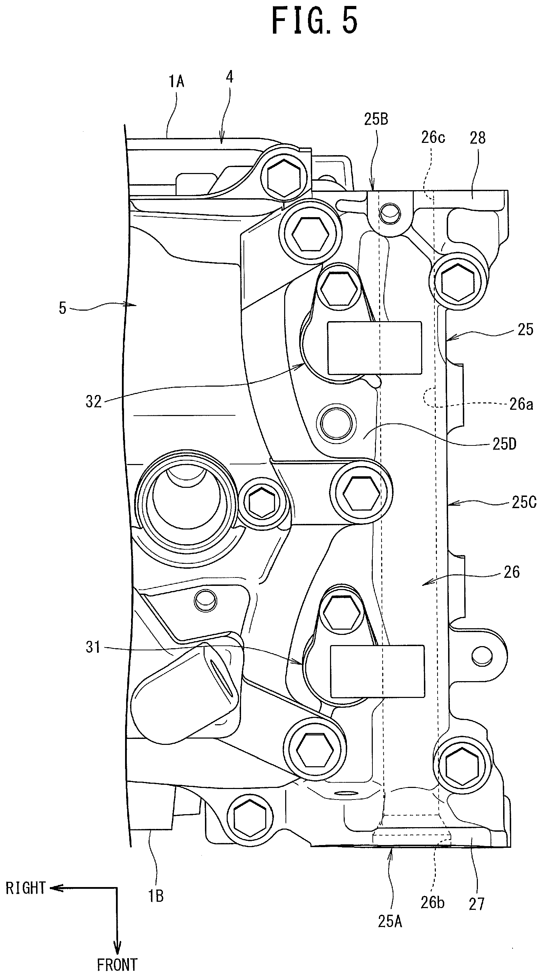

As shown in Figures 2 and 5, the EGR housing portion 25 that is separate from the cylinder head 4 is provided on the left end portion of the cylinder head 4. The EGR housing portion 25 is provided to the left of the cylinder head cover 5 and is adjacent to the cylinder head cover 5.

The cylinder head cover 5 is made of resin, and the EGR housing portion 25 is made of metal, such as an aluminum die-casting.

As shown in Figure 5, the EGR housing portion 25 has a front wall 25A, a rear wall 25B, a left side wall 25C, and an upper wall 25D.

The front wall 25A constitutes a part of the exhaust side wall 1B of the engine 1, and the rear wall 25B constitutes a part of the intake side wall 1A of the engine 1. That is, the front wall 25A is formed on the same side as the exhaust side wall 1B of the engine 1, and the rear wall 25B is located on the opposite side from the front wall 25A and is formed on the same side as the intake side wall 1A.

The left side wall 25C connects a left end portion of the front wall 25A and a left end portion of the rear wall 25B, and the upper wall 25D connects an upper end portion of the front wall 25A, an upper end portion of the rear wall 25B, and an upper end portion of the left side wall 25C.

As shown in Figure 5, the EGR housing passage portion 26 is provided in the EGR housing portion 25. The EGR housing passage portion 26 is formed in a tubular shape, and an EGR passage 26a through which EGR gas flows is formed inside the EGR housing passage portion 26.

As shown in Figures 2 and 5, the EGR housing passage portion 26 has an EGR gas introduction port 26b and an EGR gas discharge port 26c. The EGR gas introduction port 26b is provided at the front wall 25A (see Figure 3), and the EGR gas discharge port 26c is provided at the rear wall 25B.

The EGR gas introduction port 26b is an open end on an upstream side of the EGR passage 26a, and the EGR gas discharge port 26c is an open end on a downstream side of the EGR passage 26a. The EGR housing passage portion 26 is obliquely provided such that the EGR gas introduction port 26b is located above the EGR gas discharge port 26c.

The EGR passage 26a is composed of a through-hole which extends from the EGR gas introduction port 26b to the EGR gas discharge port 26c, and the EGR gas introduction port 26b is located at a position higher than the EGR gas discharge port 26c (see Figure 2). The EGR passage 26a according to the present embodiment constitutes a through-hole.

The upstream-side EGR piping 12, the EGR cooler 13, the EGR housing passage portion 26, and the downstream-side EGR piping 15 according to the present embodiment constitute the EGR passage portion. A part of exhaust gas which is discharged into the exhaust cleaning device 9 is refluxed to the intake manifold 8 through the upstream-side EGR piping 12, the EGR cooler 13, the EGR housing passage portion 26, and the downstream-side EGR piping 15.

The EGR housing passage portion 26 constitutes a head cover EGR passage portion, the EGR gas introduction port 26b constitutes an exhaust-side open portion, and the EGR gas discharge port 26c constitutes an intake-side open portion.

As shown in Figure 3, a flange portion 27 is provided at the front wall 25A, and the flange portion 27 is provided above the exhaust collection portion 4b. The EGR gas introduction port 26b is formed inside the flange portion 27, and the flange portion 27 surrounds the EGR gas introduction port 26b.

As shown in Figure 1, the EGR valve 14 has an EGR valve body 14A and a driving portion 14B. An EGR passage portion is formed inside the EGR valve body 14A, this EGR passage portion communicating between the EGR passage portion formed inside the EGR cooler 13 and the EGR housing passage portion 26.

A valve element 14C (see Figure 2) is provided in the EGR valve body 14A of the EGR valve 14, and the valve element 14C adjusts the degree of opening of the EGR passage portion in the EGR valve body 14A.

The driving portion 14B is connected to the EGR valve body 14A, and drives the valve element 14C to adjust the degree of opening of the EGR passage portion in the EGR valve body 14A and adjusts a flow rate of EGR gas which flows through the EGR housing passage portion 26.

A flange portion 14a is provided in the EGR valve body 14A. In the EGR valve 14, the flange portion 14a is fastened to the flange portion 27 by bolts 33A in a state where the flange portion 14a is positioned on the flange portion 27.

With the above-described configuration, the EGR valve 14 is attached to the front wall 25A of the EGR housing portion 25 so as to cover the EGR gas introduction port 26b.

As shown in Figures 2 and 5, a flange portion 28 is provided at the rear wall 25B, and the EGR gas discharge port 26c is formed inside the flange portion 28.

A flange portion 15a of the downstream-side EGR piping 15 is attached to the flange portion 28. An EGR gas introduction port (not shown) is provided inside the flange portion 15a, and EGR gas which flows through the EGR passage 26a is discharged from the EGR gas discharge port 26c into the downstream-side EGR piping 15 through the EGR gas introduction port in the flange portion 15a.

The EGR valve 14 according to the present embodiment is attached to the front wall 25A of the EGR housing portion 25 to be located above the exhaust collection portion 4b and the exhaust cleaning device 9, and the EGR cooler 13 is installed so as to overlap with the coolant discharge port 4c in an up-down direction (see Figure 2).

In other words, the EGR cooler 13 and the coolant discharge port 4c are provided at the same height positions in the up-down direction and are provided to be lined up in the left-right direction.

The EGR housing portion 25 according to the present embodiment constitutes a cylinder head cover. Note that the EGR housing portion 25 may be integral with the cylinder head cover 5 and that the EGR housing passage portion 26 may be formed in the cylinder head cover 5.

As shown in Figure 4, an exhaust cam angle sensor 31 and an intake cam angle sensor 32 are attached to the upper wall 25D of the EGR housing portion 25. The exhaust cam angle sensor 31 detects a rotational angle (rotational phase) of an exhaust camshaft (not shown), and the intake cam angle sensor 32 detects a rotational angle (rotational phase) of an intake camshaft (not shown).

As shown in Figure 2, a coolant branch unit 51 is attached to the coolant discharge side wall 1C, and a coolant inlet (not shown) of the coolant branch unit 51 communicates with the coolant discharge port 4c.

A main piping portion 51a, a coolant introduction pipe portion 51b, a heater core piping portion 51c, and an oil cooler piping portion 51d are provided in the coolant branch unit 51.

The main piping is connected to the main piping portion 51a, and the main piping is connected to a coolant inlet of the cylinder block 3 and a thermostat 54 (to be described later). The radiator is attached to the main piping, and coolant which flows through the main piping is cooled by the radiator.

An upstream end of a coolant introduction pipe 52 is connected to the coolant introduction pipe portion 51b, and a downstream end of the coolant introduction pipe 52 is connected to the coolant introduction portion 13B of the EGR cooler 13.

The coolant introduction pipe 52 is made of a rubber material or a resinous material. The coolant branch unit 51 introduces coolant which is discharged from the coolant discharge port 4c into the coolant introduction pipe 52, and the coolant introduction pipe 52 introduces the coolant introduced from the coolant branch unit 51 into the EGR cooler 13.

An upstream end of heater core piping (not shown) which has a heater core (not shown) is connected to the heater core piping portion 51c, and an upstream end of oil cooler piping (not shown) which has an oil cooler (not shown) is connected to the oil cooler piping portion 51d.

The thermostat 54 is attached to the coolant discharge side wall 1C. A main piping portion 54a, a coolant introduction pipe portion 54b, a heater core piping portion 54c, and an oil cooler piping portion 54d are provided in the thermostat 54. A part 55 of the main piping is connected to a downstream side of the thermostat 54, and a water pump 56 is attached to the part 55 of the main piping.

The above-described main piping is connected to the main piping portion 54a. That is, coolant which is introduced from the main piping into the coolant passage of the cylinder block 3 is introduced from the coolant passage of the cylinder block 3 into the coolant passage 20 of the cylinder head 4 and is then introduced from the coolant discharge port 4c into the EGR cooler 13 through the coolant branch unit 51 and the coolant introduction pipe 52.

The coolant that has cooled the EGR cooler 13 is introduced from a coolant discharge pipe 53 (to be described later) into the part 55 of the main piping through the thermostat 54 and is introduced from the rest of the main piping that is continuous with the part 55 of the main piping into the coolant passage of the cylinder block 3.

In other words, the main piping is piping constituting a path which introduces coolant discharged from the coolant discharge port 4c into an inlet of the coolant passage of the cylinder block 3 while cooling the coolant by the radiator. The part 55 of the main piping that is connected to the thermostat 54 is shown in Figure 2.

A downstream end of the coolant discharge pipe 53 is connected to the coolant introduction pipe portion 54b, and an upstream end of the coolant discharge pipe 53 is connected to the coolant discharge portion 13C of the EGR cooler 13. The coolant discharge pipe 53 is made of a rubber material or a resinous material. The coolant discharge pipe 53 allows high-temperature coolant that has cooled the EGR cooler 13 to flow from the EGR cooler 13 to the thermostat 54.

When a temperature of coolant becomes not less than a predetermined temperature, the thermostat 54 allows the coolant to flow to the radiator through the main piping and allows the coolant cooled by the radiator to circulate through the engine 1. The coolant that has cooled the engine 1 is introduced from the coolant branch unit 51 into the EGR cooler 13 through the coolant introduction pipe 52, thereby cooling the EGR cooler 13.

A downstream end of the above-described heater core piping is connected to the heater core piping portion 54c, and a downstream end of the above-described oil cooler piping is connected to the oil cooler piping portion 54d.

In the engine 1 according to the present embodiment, when the water pump 56 is driven, coolant flows through the main piping. This causes the coolant to circulate between the cylinder block 3, cylinder head 4, and EGR cooler 13 and the radiator and circulate through the heater core piping and the oil cooler piping.

In other words, the EGR device 11 cools EGR gas which flows through the EGR cooler 13 by allowing coolant which circulates through the cylinder block 3 and the cylinder head 4 of the engine 1 to flow so as to pass through the EGR cooler 13. The coolant introduction pipe 52 and the coolant discharge pipe 53 according to the present embodiment constitute coolant piping.

The water pump 56 according to the present embodiment is composed of an electric pump. Note that the water pump 56 may be driven by the crankshaft 7 of the engine 1.

As shown in Figures 1 and 2, the coolant introduction pipe 52 and the coolant discharge pipe 53 are installed on the opposite side of the EGR cooler 13 from the exhaust cleaning device 9. In other words, the EGR cooler 13 is installed between the exhaust cleaning device 9, and the coolant introduction pipe 52 and coolant discharge pipe 53.

The EGR cooler body 13A is formed in a rectangular parallelepiped shape which extends in a direction (the up-down direction) in which the exhaust cleaning device 9 extends.

The EGR cooler body 13A has a front wall 13a, a rear wall 13b, a left side wall 13c, and a right side wall 13d. The right side wall 13d is opposed to the exhaust cleaning device 9, and the left side wall 13c faces the right side wall 13d on the opposite side from the exhaust cleaning device 9.

The front wall 13a and the rear wall 13b connect front and rear ends (both end portions in a width direction) of the left side wall 13c and the right side wall 13d. The right side wall 13d according to the present embodiment constitutes a first side wall, and the left side wall 13c constitutes a second side wall. The front wall 13a constitutes a third side wall, and the rear wall 13b constitutes a fourth side wall.

In the EGR cooler body 13A, areas of the left side wall 13c and the right side wall 13d are set larger than areas of the front wall 13a and the rear wall 13b. The coolant introduction portion 13B and the coolant discharge portion 13C are provided at the left side wall 13c.

In other words, the EGR cooler body 13A covers the exhaust cleaning device 9 from the coolant introduction portion 13B and the coolant discharge portion 13C. The coolant introduction portion 13B and the coolant discharge portion 13C are thermally insulated from the exhaust cleaning device 9.

Effects of the EGR device 11 for the engine 1 according to the present embodiment will be described.

The EGR device 11 for the engine 1 according to the present embodiment has the upstream-side EGR piping 12 that branches from the exhaust cleaning device 9 and refluxes, as EGR gas, a part of exhaust gas which flows through the exhaust cleaning device 9 to the intake manifold 8 of the engine body 2, the EGR housing passage portion 26, and the downstream-side EGR piping 15.

The EGR device 11 is provided adjacent to the exhaust cleaning device 9 on a side closer to the exhaust side wall 1B and includes the EGR cooler 13 that constitutes a part of the EGR passage portion and the coolant introduction pipe 52 and the coolant discharge pipe 53 that cool EGR gas flowing through the EGR cooler 13 by allowing coolant circulating through the engine body 2 to flow so as to pass through the EGR cooler 13. The coolant introduction pipe 52 and the coolant discharge pipe 53 are installed on the opposite side of the EGR cooler 13 from the exhaust cleaning device 9.

With the above-described configuration, the coolant introduction pipe 52 can be installed at a position away from the exhaust cleaning device 9, and coolant flowing through the coolant introduction pipe 52 can be inhibited from being affected by heat of the exhaust cleaning device 9. For this reason, coolant which is introduced into the EGR cooler 13 can be inhibited from rising in temperature.

Additionally, since coolant flows inside the EGR cooler 13, exhaust heat can be shut off by the coolant flowing through the EGR cooler 13. For this reason, transmission of heat from the EGR cooler 13 to the coolant introduction pipe 52 can be inhibited.

It is thus possible to more effectively inhibit coolant flowing through the coolant introduction pipe 52 from being affected by heat of the exhaust cleaning device 9 before the coolant is introduced into the EGR cooler 13.

As a result, EGR gas flowing through the EGR cooler 13 can be stably cooled, and cooling performance of the EGR cooler 13 can be avoided from deteriorating.

In the EGR device 11 for the engine 1 according to the present embodiment, the EGR cooler 13 has the EGR cooler body 13A that cools EGR gas flowing through the EGR cooler 13, the coolant introduction portion 13B that is provided on the EGR cooler body 13A and is connected to the coolant introduction pipe 52, and the coolant discharge portion 13C that is provided on the EGR cooler body 13A and is connected to the coolant discharge pipe 53.

The EGR cooler body 13A has the rectangular parallelepiped shape that extends in the direction, in which the exhaust cleaning device 9 extends, and has the right side wall 13d that is opposed to the exhaust cleaning device 9, the left side wall 13c that faces the right side wall 13d on the opposite side from the exhaust cleaning device 9, and the front wall 13a and the rear wall 13b that connect both the ends in the width direction of the left side wall 13c and the right side wall 13d.

The areas of the left side wall 13c and the right side wall 13d are set larger than the areas of the front wall 13a and the rear wall 13b, and the coolant introduction portion 13B and the coolant discharge portion 13C are provided at the left side wall 13c.

With the above-described configuration, the right side wall 13d having a larger area than the front wall 13a and the rear wall 13b is opposed to the exhaust cleaning device 9 over a wide range. This allows the exhaust cleaning device 9 to be covered by the EGR cooler body 13A and the coolant introduction portion 13B and the coolant discharge portion 13C to be thermally insulated from the exhaust cleaning device 9 by the EGR cooler body 13A.

For the above-described reason, coolant flowing through the coolant introduction pipe 52 can be more effectively inhibited from being affected by heat of the exhaust cleaning device 9, and the cooling performance of the EGR cooler 13 can be more effectively inhibited from deteriorating.

In the EGR device 11 for the engine 1 according to the present embodiment, the engine body 2 has the cylinder head 4 that has the exhaust side wall 1B, at which the exhaust collection portion 4b that discharges exhaust gas is formed, and the EGR housing portion 25 that has the front wall 25A and is attached to the upper portion of the cylinder head 4.

The EGR housing passage portion 26 that constitutes a part of the EGR passage portion is provided in the EGR housing portion 25, and the coolant discharge port 4c that discharges coolant into the coolant introduction pipe 52 is provided in the cylinder head 4.

The EGR device 11 has the EGR valve 14 that is attached to the front wall 25A of the EGR housing portion 25 and adjusts a flow rate of EGR gas which flows through the EGR housing passage portion 26, and the EGR cooler 13 is installed so as to overlap with the coolant discharge port 4c in the up-down direction.

With the above-described configuration, the EGR valve 14 can be attached to the EGR housing portion 25 that is installed at a highest position in the engine 1, and the EGR cooler 13 can be installed above the engine 1.

For the above-described reason, the EGR cooler 13 can be installed at the same height position as the coolant discharge port 4c of the cylinder head 4, and the coolant introduction pipe 52 and the coolant discharge pipe 53 can be installed not to extend long in the up-down and left-right directions but to extend in the front-rear direction.

As a result, it is possible to shorten the coolant introduction pipe 52 and the coolant discharge pipe 53 to reduce installation spaces for the coolant introduction pipe 52 and the coolant discharge pipe 53 and reduce an installation space for the engine 1.

Since the coolant introduction pipe 52 and the coolant discharge pipe 53 according to the present embodiment are made of a rubber material or a resinous material, heat-induced deterioration can be reduced.

### [Reference Signs List]

1: engine (internal combustion engine)
1B: exhaust side wall
2: engine body (body of internal combustion engine)
4: cylinder head
4b: exhaust collection portion (exhaust outlet)
4c: coolant discharge port
9: exhaust cleaning device (exhaust passage portion)
10: exhaust pipe (exhaust passage portion)
11: EGR device
12: upstream-side EGR piping (EGR passage portion)
13: EGR cooler (EGR passage portion)
13A: EGR cooler body
13a: front wall (third side wall)
13B: coolant introduction portion
13b: rear wall (fourth side wall)
13C: coolant discharge portion
13c: left side wall (second side wall)
13d: right side wall (first side wall)
14: EGR valve
15: downstream-side EGR piping (EGR passage portion)
25: EGR housing portion (cylinder head cover)
25A: front wall (exhaust side wall)
26: EGR housing passage portion (EGR passage portion, head cover EGR passage portion)

## Claims

1. An internal combustion engine (1) with an EGR device (11), the internal combustion engine including:
a body (2) mounted on a vehicle, in which:
a cylinder head (4) is attached to an upper portion of a cylinder block (3);
a cylinder head cover (5, 25) is attached to an upper portion of the cylinder head (4); and
a crankshaft (7) extends along a vehicle left-right direction, and
an exhaust passage portion (9, 10) into which an exhaust gas from the body (2) is introduced, the exhaust passage portion (9, 10) being attached to an exhaust side wall (1B) of the cylinder head (4), the exhaust passage portion (9, 10) including an exhaust cleaning device (9) extending along a vehicle up-down direction,
the EGR device comprising:
an EGR passage portion (12, 13, 26, 15) branching from the exhaust cleaning device (9) to circulate, as EGR gas, a part of the exhaust gas in the exhaust passage portion (9, 10) into the body (2);
an EGR cooler (13) with an EGR cooler body (13A) formed in a rectangular parallelepiped shape, the EGR cooler body (13A) extending in a vehicle up-down direction along the exhaust cleaning device (9), the EGR cooler (13) constituting a part of the EGR passage portion (12, 13, 26, 15); and
a coolant piping (52, 53) to allow a coolant circulating in the body (2) to flow into the EGR cooler (13) to thereby cool the EGR gas flowing through the EGR cooler, wherein
the EGR cooler body (13A) includes:
a first side wall (13d) facing the exhaust cleaning device (9);
a second side wall (13c) located on the opposite side from the exhaust cleaning device (9) with respect to the first side wall (13d); and
a third side wall (13a) and a fourth side wall (13b) both of which interconnect end portions in a width direction of the first side wall (13d) and the second side wall (13c), and
the coolant piping (52, 53) is connected to the second side wall (13c).

2. The internal combustion engine (1) with an EGR device (11) as claimed in claim 1, wherein
the coolant piping (52, 53) includes a coolant introduction pipe (52) to introduce the coolant into the EGR cooler (13), and a coolant discharge pipe (53) to discharge the coolant from the EGR cooler (13),
the EGR cooler (13) includes: the EGR cooler body (13A); a coolant introduction portion (13B) provided on the EGR cooler body (13A), being connected to the coolant introduction pipe (52); and a coolant discharge portion (13C) provided on the EGR cooler body (13A), being connected to the coolant discharge pipe (53),
areas of the first side wall (13d) and the second side wall (13c) are larger than areas of the third side wall (13a) and the fourth side wall (13b), and
the coolant introduction portion (13B) and the coolant discharge portion (13C) are provided at the second side wall (13c).

3. The internal combustion engine (1) with an EGR device (11) as claimed in claim 2, wherein
a head cover EGR passage portion (26) that constitutes a part of the EGR passage portion (12, 13, 26, 15) is provided in the cylinder head cover (25),
a coolant discharge port (4c) to discharge the coolant into the coolant introduction pipe (52) is provided in the cylinder head (4),
the EGR device (11) further comprises an EGR valve (14) attached to the cylinder head cover (25), the EGR valve being configured to adjust a flow rate at which the EGR gas flows through the EGR passage portion (12, 13, 26, 15), and
the EGR cooler (13) is arranged with the coolant discharge port (4c) in a vehicle front-rear direction, in a vehicle side view.

## Patentansprüche

1. Verbrennungsmotor (1) mit einer EGR-Vorrichtung (11),
wobei der Verbrennungsmotor umfasst:
einen Körper (2), welcher an einem Fahrzeug montiert ist, in welchem:
ein Zylinderkopf (4) an einem oberen Abschnitt eines Zylinderblocks (3) angebracht ist;
eine Zylinderkopfabdeckung (5, 25) an einem oberen Abschnitt des Zylinderkopfs (4) angebracht ist; und
sich eine Kurbelwelle (7) entlang einer Fahrzeug-Links-Rechts-Richtung erstreckt, und
ein Abgasdurchgangsabschnitt (9, 10), in welchen ein Abgas-Gas von dem Körper (2) eingeleitet wird, wobei der Abgasdurchgangsabschnitt (9, 10) an einer Abgas-Seitenwand (1B) des Zylinderkopfs (4) angebracht ist, wobei der Abgasdurchgangsabschnitt (9, 10) eine Abgasreinigungsvorrichtung (9) umfasst, welche sich entlang einer Fahrzeug-Oben-Unten-Richtung erstreckt,
wobei die EGR-Vorrichtung umfasst:
einen EGR-Durchgangsabschnitt (12, 13, 26, 15), welcher von der Abgasreinigungsvorrichtung (9) abzweigt, um, als EGR-Gas, einen Teil des Abgas-Gases in den Abgasdurchgangsabschnitt (9, 10) in den Körper (2) zu zirkulieren;
einen EGR-Kühler (13) mit einem EGR-Kühlerkörper (13A), welcher in einer rechteckigen parallelepipeden Form gebildet ist, wobei sich der EGR-Kühlerkörper (13A), welcher sich in einer Fahrzeug-Oben-Unten-Richtung entlang der Abgasreinigungsvorrichtung (9) erstreckt, wobei der EGR-Kühler (13) einen Teil des EGR-Durchgangsabschnitts (12, 13, 26, 15) bildet; und
eine Kühlmittelverrohrung (52, 53), um einem Kühlmittel, welches in dem Körper (2) zirkuliert, zu erlauben, in den EGR-Kühler (13) zu strömen, um dadurch das EGR-Gas zu kühlen, welches durch den EGR-Kühler strömt, wobei
der EGR-Kühlerkörper (13A) umfasst:
eine erste Seitenwand (13d), welche der Abgasreinigungsvorrichtung (9) zugewandt ist;
eine zweite Seitenwand (13c), welche sich an der gegenüberliegenden Seite von der Abgasreinigungsvorrichtung (9) befindet, in Bezug auf die erste Seitenwand (13d); und
eine dritte Seitenwand (13a) und eine vierte Seitenwand (13b), welche beide Endabschnitte in einer Breitenrichtung der ersten Seitenwand (13d) und der zweiten Seitenwand (13c) miteinander verbinden, und
die Kühlmittelverrohrung (52, 53) mit der zweiten Seitenwand (13c) verbunden ist.

2. Verbrennungsmotor (1) mit einer EGR-Vorrichtung (11) nach Anspruch 1, wobei
die Kühlmittelverrohrung (52, 53) ein Kühlmittel-Einleitungsrohr (52), um ein Kühlmittel in den EGR-Kühler (13) einzuleiten, und ein Kühlmittel-Abführrohr (53) umfasst, um das Kühlmittel aus dem EGR-Kühler (13) abzuführen,
wobei der EGR-Kühler (13) umfasst: den EGR-Kühlerkörper (13A); einen Kühlmittel-Einleitungsabschnitt (13B), welcher an dem EGR-Kühlerkörper (13A) bereitgestellt ist, welcher mit dem Kühlmittel-Einleitungsrohr (52) verbunden ist; und einen Kühlmittel-Abführabschnitt (13C), welcher an dem EGR-Kühlerkörper (13A) bereitgestellt ist, welcher mit dem Kühlmittel-Abführrohr (53) verbunden ist,
Flächen der ersten Seitenwand (13d) und der zweiten Seitenwand (13c) größer als Flächen der dritten Seitenwand (13a) und der vierten Seitenwand (13b) sind, und
der Kühlmittel-Einleitungsabschnitt (13B) und der Kühlmittel-Abführabschnitt (13C) an der zweiten Seitenwand (13c) bereitgestellt sind.

3. Verbrennungsmotor (1) mit einer EGR-Vorrichtung (11) nach Anspruch 2, wobei
ein Kopfabdeckung-EGR-Durchgangsabschnitt (26), welcher einen Teil des EGR-Durchgangsabschnitts (12, 13, 26, 15) bildet, in der Zylinderkopfabdeckung (25) bereitgestellt ist,
ein Kühlmittel-Abführanschluss (4c), um das Kühlmittel in das Kühlmittel-Einleitungsrohr (52) abzuführen, in dem Zylinderkopf (4) bereitgestellt ist,
die EGR-Vorrichtung (11) ferner ein EGR-Ventil (14) umfasst, welches an der Zylinderkopfabdeckung (25) angebracht ist, wobei das EGR-Ventil dazu eingerichtet ist, eine Strömungsrate anzupassen, mit welcher das EGR-Gas durch den EGR-Durchgangsabschnitt (12, 13, 26, 15) strömt, und
der EGR-Kühler (13) mit dem Kühlmittel-Abführanschluss (4c) in einer Fahrzeug-Vorne-Hinten-Richtung angeordnet ist, in einer Fahrzeugseitenansicht.

## Revendications

1. Moteur à combustion interne (1) doté d'un dispositif RGE (11),
le moteur à combustion interne comportant :
un corps (2) monté sur un véhicule, dans lequel :
une culasse (4) est fixée à une partie supérieure d'un bloc-cylindres (3) ;
un couvercle de culasse (5, 25) est fixé à une partie supérieure de la culasse (4) ; et
un vilebrequin (7) s'étend le long d'une direction gauche-droite de véhicule, et
une partie de passage d'échappement (9, 10) dans laquelle un gaz d'échappement provenant du corps (2) est introduit, la partie de passage d'échappement (9, 10) étant fixée à une paroi côté échappement (1B) de la culasse (4), la partie de passage d'échappement (9, 10) comportant un dispositif de nettoyage d'échappement (9) s'étendant le long d'une direction haut-bas de véhicule,
le dispositif RGE comprenant :
une partie de passage RGE (12, 13, 26, 15) se ramifiant à partir du dispositif de nettoyage d'échappement (9) pour faire circuler, en tant que gaz RGE, une partie du gaz d'échappement dans la partie de passage d'échappement (9, 10) dans le corps (2) ;
un refroidisseur RGE (13) doté d'un corps de refroidisseur RGE (13A) formé sous une forme de parallélépipède rectangle, le corps de refroidisseur RGE (13A) s'étendant dans une direction haut-bas de véhicule le long du dispositif de nettoyage d'échappement (9), le refroidisseur RGE (13) constituant une partie de la partie de passage RGE (12, 13, 26, 15) ; et
une tuyauterie de liquide de refroidissement (52, 53) pour permettre la circulation d'un liquide de refroidissement dans le corps (2) pour son écoulement dans le refroidisseur RGE (13) pour ainsi refroidir le gaz RGE s'écoulant à travers le refroidisseur RGE, dans lequel le corps de refroidisseur RGE (13A) comporte :
une première paroi latérale (13d) faisant face au dispositif de nettoyage d'échappement (9) ;
une deuxième paroi latérale (13c) située sur le côté opposé du dispositif de nettoyage d'échappement (9) par rapport à la première paroi latérale (13d) ; et
une troisième paroi latérale (13a) et une quatrième paroi latérale (13b) raccordant toutes deux des parties d'extrémité dans le sens de la largeur de la première paroi latérale (13d) et de la deuxième paroi latérale (13c), et
la tuyauterie de liquide de refroidissement (52, 53) est raccordée à la deuxième paroi latérale (13c).

2. Moteur à combustion interne (1) doté d'un dispositif RGE (11) selon la revendication 1, dans lequel la tuyauterie de liquide de refroidissement (52, 53) comporte un tuyau d'introduction de liquide de refroidissement (52) pour introduire le liquide de refroidissement dans le refroidisseur RGE (13), et un tuyau d'évacuation de liquide de refroidissement (53) pour évacuer le liquide de refroidissement du refroidisseur RGE (13),
le refroidisseur RGE (13) comporte : le corps de refroidisseur RGE (13A) ; une partie d'introduction de liquide de refroidissement (13B) disposée sur le corps de refroidisseur RGE (13A), qui est raccordée au tuyau d'introduction de liquide de refroidissement (52) ; et une partie d'évacuation de liquide de refroidissement (13C) disposée sur le corps de refroidisseur RGE (13A), qui est raccordée au tuyau d'évacuation de liquide de refroidissement (53),
des zones de la première paroi latérale (13d) et de la deuxième paroi latérale (13c) sont plus grandes que des zones de la troisième paroi latérale (13a) et de la quatrième paroi latérale (13b), et
la partie d'introduction de liquide de refroidissement (13B) et la partie d'évacuation de liquide de refroidissement (13C) sont disposées au niveau de la deuxième paroi latérale (13c).

3. Moteur à combustion interne (1) doté d'un dispositif RGE (11) selon la revendication 2, dans lequel une partie de passage RGE de couvercle de culasse (26) qui constitue une partie de la partie de passage RGE (12, 13, 26, 15) est disposée dans le couvercle de culasse (25),
un orifice d'évacuation de liquide de refroidissement (4c) pour évacuer le liquide de refroidissement dans le tuyau d'introduction de liquide de refroidissement (52) est disposé dans la culasse (4),
le dispositif RGE (11) comprend en outre une soupape RGE (14) fixée au couvercle de culasse (25), la soupape RGE étant configurée pour régler un débit auquel le gaz RGE s'écoule à travers la partie de passage RGE (12, 13, 26, 15), et
le refroidisseur RGE (13) est agencé avec l'orifice d'évacuation de liquide de refroidissement (4c) dans une direction avant-arrière de véhicule, dans une vue latérale de véhicule.
